# EUROPEAN PATENT APPLICATION

(11) **EP 1 804 511 A1**
(43) Date of publication of application: **04.07.2007**
(21) Application number: 05078045.1
(22) Date of filing: 30.12.2005
(51) Int. Cl.: H04N 7/18, B25J 19/02

(54) **A monitoring system, a method for monitoring, a computer system and a computer program product**

(71) Applicant: Nederlandse Organisatie voor Toegepast-Natuurwetenschappelijk Onderzoek TNO, 2628 VK Delft (NL)
(72) Inventor: Puik, Erik Christian Nicolaas, 5624 NR Eindhoven (NL)
(74) Representative: Winckels, Johannes Hubertus F.

(57) **Abstract**

The invention relates to a monitoring system for use in a teleoperation system. The monitoring system comprises a camera which is arranged to capture an image of at least a part of a space which is suitable for displacing therein an object from a first position to a second position. Further, the monitoring system is arranged to mask a part of the image.

## Description

The invention is related to a monitoring system for use in a teleoperation system, the monitoring system comprising a camera which is arranged to capture an image of at least a part of a space which is suitable for displacing therein an object from a first position to a second position.

Such a system is known in itself and is used for controlling tasks such as manufacturing or assembling by wire an apparatus in for instance an environment that should remain free from human beings or that is not suitable for entrance by human beings. Such an environment may be in space in or even outside a space lab, in a sterile environment or in an environment that is for instance poisonous, noisy or otherwise unattractive and/or dangerous. It may also be applied to assemble parts which are not visible by an unaided eye, e.g. due to their small sizes. Another possible use is in situations where a specialized person capable of carrying out a difficult task is not present at a place where the difficult task is to be carried out. As an example, medical operations may be carried out via teleoperation. It is also conceivable that tasks to be performed in a high-tech environment are via teleoperation controlled by relatively inexpensive labourers in low costs countries while some physical actions forming part of the task itself occur in a high cost country.

Although these teleoperation systems operate in principle satisfactorily, a problem is that the camera captures in certain situations more details than necessary, which may disturb the viewer and its focus on the job. It is in certain situations also disadvantageous that for instance the method of assembling or manufacturing is fully disclosed by the images of the camera so that a viewer can view all method steps, while it is desired that some of them are kept secret for some reason. Furthermore, the images can easily be copied, enabling the uncontrolled widespread use of the images allowing others to copy the process captured by the images. It may also be possible that the transmission of the images is intercepted and that for instance a secret sequence of steps in a process as captured by the camera, is stolen, even without knowledge of a legitimate party that uses the process.

It has been known to transmit at least a part of the images in a coded fashion so as to minimize the probability that at a receiving end or by an unauthorized intercepting party the images can be viewed. However, many codes can be cracked if enough computer power is available. The transmission of captured images in a coded fashion may therefore be not reliable enough.

It is an object of the present invention to provide a monitoring system that is described above and that meets at least some of the problems outlined above.

Thereto the monitoring system according to the invention is further arranged to mask a part of the image.

By masking a part of the captured image, the resulting image shows a masked section instead of the space masked by the masking step. Therefore, a legal viewer of the masked image or an interceptor of the masked image will not be able to see the part of the space that is masked. As such, certain information about the space will not be revealed by the masked image. On the other hand, any viewer of the masked image will be able to focus on the parts of the space that are revealed by the image. The position of the masked part of the image may be chosen such that the masked image shows enough details that are required for carrying out the necessary controlling of the displacement of the object. It will be clear that the masked part of the image may be occupied by the object itself, a part from which and/or to which the object is to be displaced within the space, or both.

It is noted that within this context a camera is to be understood as an electronic device arranged to capture a visible image or an image which can be made visible by performing a single or a multiple set of processing steps. Examples of such cameras are a still camera, a camcorder, an infrared camera, a web cam, etc.

Further, it is noted that the step of masking a part of the image may be performed before and/or after capturing the image. As an example of a pre-capturing masking step, an interference of a light path between the object and the camera might be generated. As an alternative, part of the camera recording area might be blocked or pre-processed. Further, an example of a post-capturing masking step is formed by a post-processing step performed on image related information of a captured image. As an alternative thereof, only a complementary part of the captured image might be transmitted to a viewer.

In an embodiment of a system according to the invention, the mask is arranged to mask a stationary part of the space. It is thus possible that for instance a part of the space to which the object is displaced is not visible in the images captured by the camera. As such, it may not be possible to derive from the image what is manufactured or assembled whilst positioning is still feasible by teleoperation and visible up to a certain extent. In this case a skilled operator may still manipulate an object that is difficult to manipulate. The skill may for instance comprise the action of grabbing the object. Once the object is grabbed, it may be displaced from the first position to the second position being at a certain predetermined and masked place. The object may then be released for further assembling and/or processing. It is noted however, that instead of masking a stationary part of the image, also other parts might be masked, such as moving parts of the image.

In a further embodiment of a system according to the invention, the monitoring system is further arranged to mask a plurality of parts of the image. This allows more complex tasks to be carried out by teleoperation without releasing too much detailed information to operators and viewers of the processed images. In order to obtain a relatively simple masking step, also a single part of the image might be masked.

By providing a mask with a position indicator and/or an individual mark related indicator, easy operation is allowed, while the chance of operator confusion is reduced. In such an embodiment a plurality of masked parts of the image remains still distinguishable with respect to each other allowing the operators to carry out more complicated tasks.

It is noted that the camera can be arranged to capture not merely one still image, but a sequence of images in order to view the process of displacing the object.

Further, in a preferred embodiment, information of a first teleoperation process performed by a first operator is shielded from an independent and mutually unknown operator carrying out a second process, and vice versa, thus not releasing vital information of an entire process. As an example, each operator may fill a masked box in a particular order and from a particular side, so that none of the operators obtains information as to what precisely occurs in the space wherein the object is displaced.

Further, the invention relates to method for monitoring a teleoperation process, comprising the steps of capturing an image of at least a part of a space which is suitable for displacing therein an object from a first position to a second position; and masking a part of the image.

The invention relates also to a computer system comprising a computer station being arranged to process an image captured by a camera showing at least a part of a space wherein an object is displaced from a first position to a second position, wherein the step of processing the image comprises the step of masking a part of the image.

In addition, the invention relates to a computer program product for processing an image captured by a camera showing at least a part of a space wherein an object is displaced from a first position to a second position, which computer program product comprises instructions for causing a processor to perform the step of masking a part of the image.

By way of example only, embodiments of the present invention will now be described with reference to the accompanying figures in which
Fig. 1 shows a monitoring system according to the invention for use in a teleoperation system;
Fig. 2 shows a space which is suitable for displacing therein an object; and
Fig. 3 shows an image having a masked part.

The figures are merely schematic views of preferred embodiments according to the invention. In the figures, the same reference numbers refer to equal or corresponding parts.

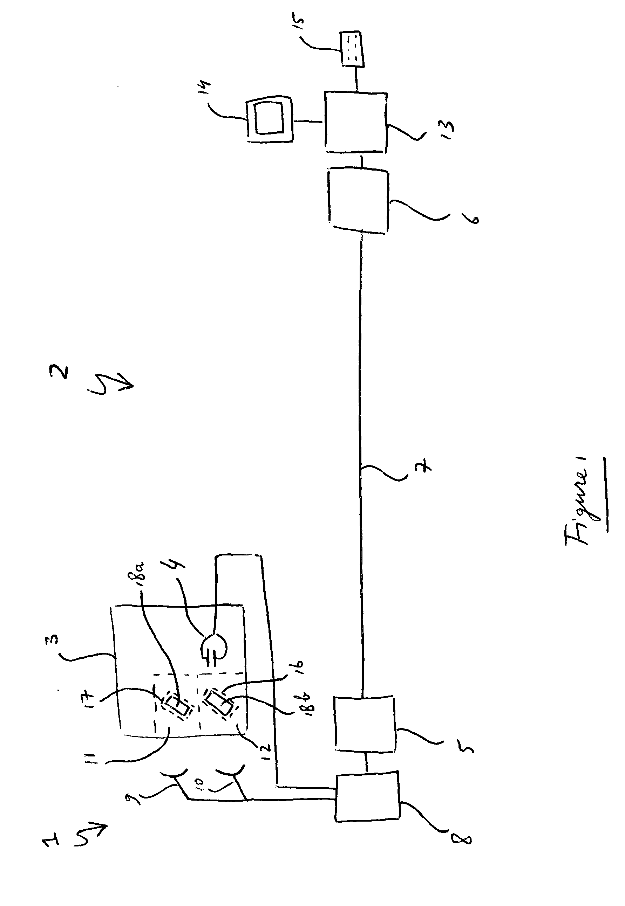

Figure 1 shows a monitoring system 1 according to the invention for use in a teleoperation system 2. The teleoperation system 2 is arranged for performing displacement processes of objects in a space 3, such as a space lab or a sterile environment. The displacement processes are performed by a manipulator 4 which is arranged in or near the space 3 and is controlled by an operator at a remote position.

The teleoperation system 2 comprises a first and a second communication station 5; 6 being interconnected by a data connection which is preferably implemented as an Internet connection 7, so that a relatively cheap connection is established between the operator and the location where objects are displaced, as will be explained below.

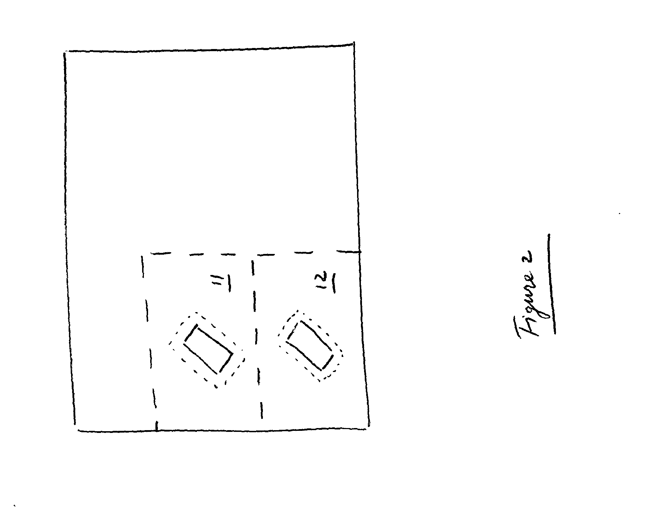

The first communication station 5 is connected with a first computer station 8. The computer station is wired with two cameras 9, 10, each of them capturing an image of a part 11, 12 of the space 3, see in more detail Figure 2. The parts 11, 12 being captured by the cameras 9, 10 are positioned adjacent each other, but may also overlap or be remote from each other. Further, also the manipulator 4 is connected to the computer station 8. The first computer station 8 processes data of images captured by the cameras 9, 10 and sends the processed data via the first communication station 5 and the Internet connection to the second station 6. Further, the first computer station 8 receives control data via the Internet connection 7 and the first communication station 5 for controlling the manipulator 4.

The interconnected first computer station 8 and the cameras form part of the monitoring system 1 according to the invention.

The second communication station 6 is connected to a second computer station 13 which is further interconnected with a display 14 and input means, such as a keyboard 15 or a steering element. The second communication station 6 acts as a receiving station with respect to image data that is transmitted by the first communication station 5. Further, the operator may send instruction data via the input means, the second computer station 13, the second communication station 6 and the Internet connection 7 to the first station 5.

It is noted that all or part of the wired connections can also be implemented as wireless connections, such as a blue tooth or Wifi connection.

During operation an object 16 is displaced by the manipulator actuated using control data send by the remote operator as is known in the art.

The monitoring system 1 is associated with the manipulator 4 by means of the first computer station 8, so that position information of the manipulator 4 is associated with the monitoring system 1. However, the monitoring system 1 can also be implemented independent of manipulator information, e.g. for capturing visual information of a static part of the space 3.

Further, a part of each of the images captured by the cameras 9, 10 is masked by the monitoring system 2. The masked part 16, 17 of the images is associated with the manipulator 4. Advantageously, the masked part 16, 17 can be related to movements of the manipulator and thus by movements of an object 18 to be displaced. In Figure 1, the object position 18a, 18b at consecutive time instants is shown.

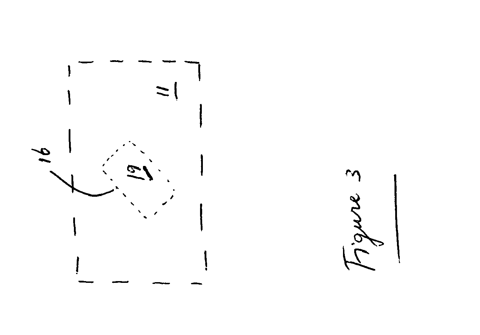

In the embodiment shown in the figures the object position 18a, 18b is masked or shielded by a mask 19 masking the masked part of the images, see in more detail Figure 3. Therefore, the object 18 is not visible in the masked image, so that the operator is not able to recognize the object type. Further, a movement of the manipulator 4 and a movement of the camera are coupled, so that the object 18 remains invisible, independently of object movements. It is noted that coupling of the manipulator 4 and the camera can also be obtained by physically attaching a camera to the manipulator 4.

The masking step can be performed by using a shielding element in a light path between the object and the camera, thus blocking the light travelling from the object to the camera.

However, in the present embodiment the step of masking a part of the images is performed by a computer program product run on the first computer station 8. The computer program product processes the image data by irreversibly transforming pixel information in the part of the image to be masked, so that image information in the part of the image to be masked is lost. It is noted that the computer program product might also be implemented on another computer system, such as the second computer station 13. As a consequence, the step of masking a part of the image can also be performed after sending the image to a receiving station.

Optionally, the step of transforming pixel information is performed by a randomly generated process. In this process, pixel information of pixels in the part of the image to be masked is replaced by pixel values that are randomly generated. As a consequence, pixel information of pixels in the part of the image to be masked is removed from the image.

The invention is not restricted to the embodiments described herein. It will be understood that many variants are possible.

In stead of using two cameras it might be possible to employ a single camera or more than two cameras, such as three cameras, each of them capturing one or more images, especially if relatively complex object displacements have to be performed.

Further, as the person skilled in the art will understand, multiple objects in stead of a single object might be displaced when using a monitoring system according to the invention. The multiple objects might be displaced sequentially and/or simultaneously.

In addition, it is noted that multiple operators and/or multiple manipulators can be connected to the teleoperation system.

Other such variants will be obvious for the person skilled in the art and are considered to lie within the scope of the invention as formulated in the following claims.

## Claims

1. A monitoring system for use in a teleoperation system, the monitoring system comprising a camera which is arranged to capture an image of at least a part of a space which is suitable for displacing therein an object from a first position to a second position, wherein the monitoring system is further arranged to mask a part of the image.

2. A monitoring system according to claim 1, further being arranged to mask a stationary part of the space.

3. A monitoring system according to claim 1 or 2, further being arranged to mask a plurality of parts of the image.

4. A monitoring system according to any of the previous claims, wherein the masked part of the image is provided with a position indicator and/or an individual mask related indicator.

5. A monitoring system according to any of the previous claims, further being associated with a manipulator for displacing the object.

6. A monitoring system according to any of the previous claims, wherein the masked part of the image is associated with the manipulator.

7. A monitoring system according to any of the previous claims, wherein a movement of the manipulator and a movement of the camera are coupled.

8. A monitoring system according to any of the previous claims, further being arranged to mask the part of the image by interfering with at least a part of a light path between the object and the camera.

9. A monitoring system according to any of the previous claims, wherein interfering comprises blocking.

10. A monitoring system according to any of the previous claims, further comprising a computer program product for processing the part of the image to be masked.

11. A monitoring system according to any of the previous claims, further being arranged to be used in a teleoperation system comprising an Internet connection for monitoring from a remote position the at least part of the space and for controlling from the remote position displacing the object.

12. A method for monitoring a teleoperation process, comprising the steps of:
- capturing an image of at least a part of a space which is suitable for displacing therein an object from a first position to a second position; and
- masking a part of the image.

13. A method according to claim 12, further comprising the step of transmitting image data to a receiving station.

14. A method according to claim 12 or 13, wherein the step of masking a part of the image comprises irreversibly transforming pixel information in the part of the image to be masked.

15. A method according to any of claims 12-14, wherein the step of masking a part of the image comprises randomly processing pixel information in the part of the image to be masked.

16. A computer system, comprising a computer station being arranged to process an image captured by a camera showing at least a part of a space wherein an object is displaced from a first position to a second position, wherein the step of processing the image comprises the step of masking a part of the image.

17. A computer program product for processing an image captured by a camera showing at least a part of a space wherein an object is displaced from a first position to a second position, which computer program product comprises instructions for causing a processor to perform the step of masking a part of the image.
